# EUROPEAN PATENT APPLICATION

(11) **EP 1 964 898 A1**
(43) Date of publication of application: **03.09.2008**
(21) Application number: 07003652.0
(22) Date of filing: 22.02.2007
(51) Int. Cl.: C09D 161/06, C09D 167/02, C08L 61/06, C08L 67/00

(54) **Coating compositions for can coating comprising phenolic resins**

(71) Applicant: Cytec Surface Specialties Austria GmbH, 8010 Graz (AT)
(72) Inventor: Urbano, Edmund, Dr., 8044 Graz (AT); Brindöpke, Gerhard, Dr., 65934 Frankfurt (DE); Etz, Oliver, 65510 Hünstetten (DE)
(74) Representative: Deckers, Hellmuth Alexander

(57) **Abstract**

A mixture is disclosed comprising phenolic resins **B** and saturated polyesters **A** wherein the polyesters **A** comprise building blocks derived from aliphatic dicarboxylic acids **AA,** diprimary dihydric cycloaliphatic alcohols **AB,** diprimary dihydric linear or branched, non-cyclic aliphatic alcohols **AC** containing ether links, diprimary linear or branched non-cyclic dihydric alcohols **AD** being free from ether linkages, aromatic dicarboxylic acids **AE,** trihydric or higher functional aliphatic alcohols **AF,** and phosphorous containing acids **AG** selected from the group consisting of orthophosphoric acid, pyrophosphoric acids, phosphorous acid, and the mono- and dialkyl esters of these, and also a method of use of such mixtures for coating of metal sheets, particularly interior coating of cans.

## Description

The invention relates to coating compositions comprising phenolic resins, a process of making thereof, and a method of use thereof to provide coating compositions for can coating.

Presently, coating compositions for can interiors usually comprise combinations of phenolic resins and epoxy resins, the latter being customarily based on reaction products of 2,2-bis-(4-hydroxyphenyl)-propane bis-(2,3-epoxypropyl)-ether, or bisphenol A diglycidyl ether, abbreviated as "BADGE". Small amounts of BADGE usually remain in the resin, and are prone to be extracted from coatings based on such resins.

BADGE is deemed to be a hasardous material. It is therefore an object of the invention to replace BADGE based materials especially when in contact with food. Coating compositions based on phenolic resins alone do not provide the needed combination of adhesion to metallic substrates, elasticity against cupping or deep drawing, and stability towards food ingredients.

The object is therefore to provide a phenolic resin-based coating composition for interior coating of cans where no BADGE based materials or materials made by reacting BADGE with further substances are used as a further constituent.

It has been proposed, in EP 1584 667 A1, to provide mixtures of phenolic resins with branched carboxy-functional polyesters. Although devoid of BADGE and BADGE-derived products, it has been found that these systems still need improvement with regard to sterilisation resistance and sulphur staining.

This object has been achieved by providing mixtures based on phenolic resins **B** that further comprise saturated polyesters **A** with low functionality.

The polyesters **A** are made by a polycondensation reaction from aliphatic dicarboxylic acids **AA,** diprimary dihydric cycloaliphatic alcohols **AB,** diprimary dihydric linear or branched, non-cyclic aliphatic alcohols **AC** containing ether links, diprimary linear or branched non-cyclic dihydric alcohols **AD** being free from ether linkages, aromatic dicarboxylic acids **AE,** trihydric or higher functional aliphatic alcohols **AF,** in particular polymethylol alkanes, and phosphorus containing acids **AG** selected from the group consisting of orthophosphoric acid, pyrophosphoric acid, phosphorous acid, and esters of these.

Preferably, the said constituents of the polyester A individually have: **AA:** from 2 to 36 carbon atoms, particularly preferred from 4 to 12 carbon atoms, **AB:** from 7 to 20 carbon atoms, particularly preferred from 8 to 15 carbon atoms, **AC:** from 4 to 15 carbon atoms, particularly preferred from 6 to 12 carbon atoms, **AD:** from 2 to 36 carbon atoms, particularly preferred from 3 to 12 carbon atoms, **AE:** from 8 to 18 carbon atoms, particularly preferred from 9 to 14 carbon atoms, **AF:** from 4 to 20 carbon atoms, particularly preferred from 5 to 15 carbon atoms.

The polyesters **A** have preferably low functionality both with respect to residual acid groups and residual hydroxyl groups. It is also preferred that there are no secondary hydroxyl groups in the hydroxy functional components used to make the polyester, **A.**

Mass fractions of the said constituents in the polyester are for **AA:** preferably from 0.5 % to 20 %, particularly preferred from 2 % to 15 %, and especially preferred, from 3 % to 10 %; for **AB:** from 1 % to 30 %, particularly preferred from 2 % to 25 %, and especially preferred, from 5 % to 20 %; for **AC:** from 1 % to 30 %, particularly preferred from 2 % to 25 %, and especially preferred, from 5 % to 20 %; for **AD:** from 2 % to 30 %, particularly preferred from 5 % to 25 %, and especially preferred, from 10 % to 20 %; for **AE:** from 3 % to 60 %, particularly preferred from 5 % to 50 %, and especially preferred, from 10 % to 35 %; for **AF:** from 0 % to 5.0 %, particularly preferred from 0.02 % to 3 % and especially preferred, from 0.1 % to 2 %; and for **AG:** from 0.02 % to 5.0 %, particularly preferred from 0.03 % to 1.0 %, and especially preferred, from 0.05 % to 0.5 %.

The polyesters according to the invention have a viscosity, measured in a 50 % strength solution in methoxypropyl acetate (60 g of polyester in 100 g of the solution) at 23 °C and a shear gradient of 25 s⁻¹, measured according to DIN-EN ISO 3219, of at least 500 mPa·s, preferably of at least 1000 mPa·s.

The ratio of the masses m(**A**) of polyester **A** to the mass m(**B**) of phenolic resins **B** is from (50 to 95) : (50 to 5), preferably (55 to 90) : (45 to 10), and particularly preferred, from (60 to 85) : (40 to 15).

Preferably, the polyesters **A** according to the invention have an acid number of less than 20 mg/g, particularly preferably, of less than 10 mg/g, and especially preferred, not more than 8 mg/g. Their hydroxyl number is preferably less than 30 mg/g, particularly preferred less than 20 mg/g, and especially preferred, from 1 mg/g to 10 mg/g.

The acid number is defined according to the standard DIN EN ISO 3682 as the ratio of the mass *m*_{KOH} of potassium hydroxide needed to neutralise a sample, and the mass *m*_{B} of this sample (or the mass of the solids in the said sample in the case of a solution or dispersion); the customary unit is "mg/g".

The hydroxyl number is defined according to the standard DIN EN ISO 4629 as the ratio of the mass *m*_{KOH} of potassium hydroxide having exactly the same number of hydroxyl groups as the sample under investigation, and the mass *m*_{B} of the said sample (or the mass of the solids in the said sample in the case of a solution or dispersion); the customary unit is "mg/g".

The mixtures according to the invention are distinguished from the customary combinations of phenolic resins and epoxy resins by the fact that they are completely free from BADGE while retaining the advantageous properties of the customary combinations. Compared to systems comprising epoxy resins and melamine resins, they have far better resistance properties in contact with food especially upon sterilisation.

The polyesters **A** may be obtained by polycondensation of aliphatic dicarboxylic acids **AA,** preferably malonic, succinic, glutaric, adipic, pimelic or suberic acids, or dimeric fatty acids, or mixtures of these, diprimary cycloaliphatic diols **AB** such as 1,2- or 1,3-bishydroxymethyl cyclopentane, 5,5-bis(hydroxymethyl) 1,3-dioxane, 1,2-, 1,3-, or 1,4-cyclohexane dimethanol, their adducts with ethylene oxide, perhydrogenated bisphenol A or F, and the addition products of ethylene oxide to perhydrogenated bisphenol A or F, which may optionally be methyl substituted in one or more positions, aliphatic diprimary ether glycols **AC** such as diethylene glycol, triethylene glycol, diprimary linear or branched dihydric alcohols **AD** being free from ether linkages, such as ethylene glycol, 1,3-propylene glycol, 2-methyl-1,3-propane diol, 1,4-butane diol, 1,6-hexane diol, neopentyl glycol, and the isomers of trimethyl hexane diol-(1,6), aromatic dicarboxylic acids **AE** such as phthalic acid, isophthalic acid, terephthalic acid, 4,4'-diphenyl dicarboxylic acid, 4,4'-diphenyl ether dicarboxylic acid, 4,4'-diphenyl sulphone dicarboxylic acid, 4,4'-benzophenone dicarboxylic acid, 1,4-, 1,5-, 1,8-, 2,3- and 2,6-naphthalene dicarboxylic acids, trihydric or higher functional aliphatic alcohols **AF,** in particular polymethylol alkanes such as trimethylol methane, trimethylol ethane, and trimethylol propane, glycerol, erythritol, pentaerythritol, ditrimethylol propane, and a phosphorus containing acid **AG** selected from the group consisting of orthophosphoric acid, pyrophosphoric acids, phosphorous acid, aliphatic phosphonic acids such as methane phosphonic acid, and esters of these, for example aromatic compounds such as diphenyl phosphite. It is preferred to use as component **AG** an acid which is derived from phosphorus and which is at least trivalent, such as orthophosphoric acid, pyrophosphoric acids, phosphorous acid, and aliphatic phosphonic acids.

The said alcohols and acids may also be partially or completely replaced by reactive derivatives thereof such as acid anhydrides or esters with volatile alcohols or esters of the alcohols with volatile acids.

Phenolic resins which may preferably be used for the invention are resols **B,** particularly etherified resols obtained by reaction of phenols or mixtures or more than one phenol having at least one hydrogen atom in the aromatic nucleus in ortho or para position to the hydroxyl group(s) with aldehydes, particularly formaldehyde, by alkaline catalysis, and which are subsequently at least partially etherified under acidic conditions with linear or branched alcohols, particularly methanol and n- or iso-butanol. Especially preferred are resols etherified with n- or iso-butanol having a mass fraction of at least 20 % of cresol-derived constituents.

Partially etherified resols are understood to be, in the context of the present invention, those resols where at least 20 % of their hydroxymethyl groups are etherified with the said aliphatic alcohols.

The polyesters **A** are mixed with the phenolic resins **B** and optionally, customary additives such as levelling agents, crosslinking catalysts, and solvents to yield coating compositions.

The coating compositions thus obtained are preferentially used for the coating of metallic substrates, particularly for interior coating of metal containers, such as preferably those that are used as food containers. After stoving at temperatures of from 160 °C to 250 °C, yellow or gold films are formed which have excellent adhesion to the metal substrate even upon mechanical stress, and good resistance against the usual charges.

The invention is further illustrated by the following examples which are not to be construed as limiting.

In the following examples, as well as in the preceding text, all quantities expressed as "%" denote mass fractions (ratio of the mass of the substance under consideration to the mass of the mixture or reaction product) if not otherwise defined. Concentrations in "%" are mass fractions of the solute in the solution (mass of the solute, divided by the mass of the solution).

### Examples

### Example 1 Synthesis of polyester resins

Polyesters 1.1 and 1.2 were made by mixing the educts (starting materials) as mentioned in table 1 (masses in g) and heating to about 220 °C under removal of the water formed in the reaction by azeotropice distillation with xylene and recycling of the latter. The reaction was continued until the acid number in the reaction mixture reached a constant value. The reaction mixture was subsequently cooled to 140 °C, and diluted with methoxypropyl acetate. The mass fraction of solids was about 50 %.

**Table 1: Composition (Mass of Educts in g) and Properties of the Polyesters**

| | | | |
|---|---|---|---|
| Example | | 1.1 | 12 |
| Educts: | | | |
| Adipic Acid | | 10.5 | 6.5 |
| Cyclohexane Dimethanol | | 10.5 | 15 |
| Diethylene Glycol | | 10.4 | 12.5 |
| Ethylene Glycol | | 13 | 8.4 |
| Isophthalic Acid | | 25.5 | 39.5 |
| Methylpropane Diol | | 2.9 | 0 |
| Terephthalic Acid | | 25.5 | 0.3 |
| Trimethylol Propane | | 1.4 | 0.6 |
| Solid Resin | | 82.5 | 83.2 |
| Acid Number | in mg/g | 5.7 | 2.5 |
| Hydroxyl Number | in mg/g | 9.0 | 5.0 |
| Viscosity* at 23 °C | in mPa·s | 6200 | 9500 |

| | | | |
|---|---|---|---|
| *Viscosity was determined on a solution in methoxypropyl acetate (50 g of the polyester in 100 g of the solution). | | | |

### Comparative Example 1

A further polyester (1.3) was prepared according to the procedure of Example 1, from the following educts: 6.5 g of adipic acid, 10.6 g of cyclohexane dimethanol, 11.4 g of diethylene glycol, 16.7 g of 1,2-propylene glycol (alcoholic component comprising both primary and secondary hydroxyl groups), 53.2 g of isophthalic acid, 0.1 g of phosphoric acid, and 1.5 g of trimethylol propane. 84.5 g of a colourless resin were obtained, having the following characteristics:

| | |
|---|---|
| acid number | 8.7 mg/g |
| hydroxyl number | 10.5 mg/g |
| viscosity | 3800 mPa·s. |

### Example 2 Preparation of an Etherified Resol from o-Cresol

108 g of o-cresol were heated with 18.18 g of a 33 % strength aqueous solution of sodium hydroxide (33 g of NaOH in 100 g of the solution) and 138 g of a 37 % strength aqueous solution of formaldehyde to 80 °C and kept at this temperature until the residual formaldehyde concentration (mass fraction of formaldehyde in the solution) had decreased to less than 2 %. 29.4 g of a 25 % strength aqueous solution of sulphuric acid were then added to adjust the pH to a value between 5 and 6. The higher density phase was allowed to settle at 80 °C. After separation of the bottom (= higher density) phase, the product was mixed at the same temperature with a further 40 g of water which was removed after phase separation. 120 g of n-butanol were then added, and the water formed during etherification was removed via azeotropic distillation and recycling of the organic phase.

The mass fraction of solids (determined according to DIN EN 3251) of the resin solution was adjusted to 80 % by addition of further n-butanol, and the precipitates (salts) were removed from the solution. A resol solution based on o-cresol etherified with n-butanol was obtained.

### Example 3 Paint Test

A mixture (paint 1) was prepared from the phenolic resin of Example 2 and the polyester 1.1 of Example 1. A further mixture (paint 2) was prepared from the phenolic resin of Example 2 and the polyester 1.3 of the Comparative Example, as well as mixtures of the same phenolic resin with epoxy resins of type 7 (paint 3) and of type 9 (paint 4), which were all adjusted to the same viscosity by addition of solvent. Mass ratios of phenolic resin and modifying resin (polyester or epoxy resin) were the same in each case. Customary metal sheets for the manufacture of cans were coated with these paints, the paint films were subjected to stoving at 200 °C for 12 minutes. The cured coating films had a dry thickness of approximately 5 µm and were all of golden colour.

**Table 2 Paint Formulations (Masses of Components in g) and Results**

| | Paint 1 | Paint 2 | Paint 3 | Paint 4 |
|---|---|---|---|---|
| Phenolic Resin (as solid matter) | 15.4 | 15.20 | 11.74 | 10.52 |
| Modifying Resin (as solid matter) | 35.0 | 34.55 | 27.32 | 24.48 |
| Solvent ¹ | 49.6 | 50.25 | 60.94 | 65.00 |
| Mass Fraction of Solids | 50.4 % | 49.75% | 39.06 % | 35.0 % |
| "Wedge Bend Test" ² | 75 % | 50 % | 65 % | 75 % |
| Sterilisation Test (Bottom) ³ | OK | sd | sd | sd |
| Sterilisation Test (Sides) ³ | OK | cracks | sr | sr |
| Sterilisation Test (Bottom) ⁴ | OK | cracks | sd | sd |
| Sterilisation Test (Sides) ⁴ | OK | cracks | sr | sr |
| Sterilisation, Cross Cut Test ⁵ | 0 | 3 | 0 | 0 |
| Sterilisation, Surface ⁵ | OK | md | sd | sd |
| Sulphur Staining Test ⁶ | 1 | 4 | 3 to 4 | 3 |

### Abbreviations:

- sd: slight discolouration
- md: marked discolouration
- sr: slight surface roughness
- OK: no deterioration
- 1: solvent mixture of n-butanol and methoxypropanol, in each case adjusted to the same application viscosity
- 2: the coated metal sheet is bent over a 90° edge and then subjected for five minutes to a solution of 132 g of copper sulphate pentahydrate and 20 g of concentrated hydrochloric acid (aqueous solution of hydrogen chloride having a concentration of 32 g of HCI in 100 g of the solution) in 900 g of distilled water. The fraction of non-corroded edges is reported.
- 3: Sterilisation Test in a 2 % strength aqueous lactic acid solution at 129 °C for one hour, measured on a cup of 5 cm diameter and 2,5 cm height; the appearance of the bottom and sides are reported
- 4: Sterilisation Test in a 2 % strength aqueous lactic acid solution at 129 °C for one hour, measured on a cup of 4 cm diameter and 3,5 cm height; the appearance of the bottom and sides are reported
- 5: Sterilisation Test in a 2 %strength aqueous lactic acid solution at 129 °C for one hour, measured on flat metal sheets; the results of cross cut testing and the appearance of the surface are reported
- 6: Sulphur Staining Resistance test in 0.05 % strength aqueous cystein solution at 121 °C for ninety minutes measured on flat metal sheets; the results of cross cut testing and the appearance of the surface are reported
- Cross Cut Test:: from "0": no corrosion and no underrusting,
to "5": strong corrosion and underrusting

At the same application viscosity as conventional epoxy modified formulations, the polyester-modified phenolic resin formulations according to the invention display increased solids content, results in the sterilisation testing are improved. It goes without saying that the absence of extractable BADGE from the coating thus prepared is an important advantage. Likewise, wedge bend test performance is also improved.

It is also surprising and non-obvious that selection of the polyester composition as claimed showed improved overall performance, compared to similar polyesters having a composition which is outside of the claimed range.

## Claims

1. A mixture comprising phenolic resins **B** and saturated polyesters **A** wherein the polyesters **A** comprise building blocks derived from aliphatic dicarboxylic acids **AA,** diprimary dihydric cycloaliphatic alcohols **AB,** diprimary dihydric linear or branched, non-cyclic aliphatic alcohols **AC** containing ether links, diprimary linear or branched non-cyclic dihydric alcohols **AD** being free from ether linkages, aromatic dicarboxylic acids **AE,** trihydric or higher functional aliphatic alcohols **AF,** and phosphorous containing acids **AG** selected from the group consisting of orthophosphoric acid, pyrophosphoric acids, phosphorous acid, and esters of these.

2. The mixture of claim 1 wherein the polyesters **A** comprise moieties of an inorganic at least trivalent phosphorus containing acid **AG.**

3. The mixture of claim 1 wherein the mass fractions of moieties derived from the alcohols and acids are for **AA** from 0.5 % to 20 %, for **AB** from 1 % to 30 %, for **AC** from 1 % to 30 %, for **AD** from 2 % to 30 %, for **AE** from 3 % to 60 %, for **AF** from 0 % to 5 %, and for **AG** from 0.02 % to 5 %.

4. The mixture of claim 1 wherein the ratio of the mass m(**A**) of the polyester **A** to the mass m(**B**) of the phenolic resins **B** is from (50 to 95) : (50 to 5).

5. The mixture of claim 1 wherein the polyester **A** has an acid number of less than 20 mg/g and a hydroxyl number of less than 30 mg/g.

6. The mixture of claim 1 wherein the components **AA** have from 2 to 36 carbon atoms, the components **AB** have from 7 to 20 carbon atoms, the components **AC** have from 4 to 15 carbon atoms, the components **AD** have from 2 to 36 carbon atoms, the components **AE** have from 8 to 18 carbon atoms, and the components **AF** have from 4 to 20 carbon atoms.

7. The mixture of claim 1 wherein the at least trihydric alcohols **AF** are selected from the group consisting of trimethylol ethane, trimethylol propane and pentaerythritol.

8. A method of use of the mixture of claim 1 for interior coating of cans, wherein the mixture comprises a mass fraction of from 50 % to 95 % of the said saturated polyester **A** and a mass fraction of from 50 % to 5 % of the said phenolic resin **B,** comprising applying the said mixture by spraying, dip coating, brushing, or roller coating onto metal surfaces.

9. The method of claim 8 comprising applying the said mixture of the said saturated polyester **A** and the said phenolic resin **B** to the interior surface of a can for food packaging.
